**Europäisches Patentamt**

**European Patent Office**

**Office européen des brevets**

(19)

(11) **EP 1 318 414 A2**

(12) **EUROPÄISCHE PATENTANMELDUNG**

(43) Veröffentlichungstag:
**11.06.2003 Patentblatt 2003/24**

(51) Int Cl.7: **G01S 13/90**, G01S 13/89,
G01C 15/00

(21) Anmeldenummer: **02027103.7**

(22) Anmeldetag: **04.12.2002**

(84) Benannte Vertragsstaaten:
**AT BE BG CH CY CZ DE DK EE ES FI FR GB GR
IE IT LI LU MC NL PT SE SI SK TR**
Benannte Erstreckungsstaaten:
**AL LT LV MK RO**

(30) Priorität: **10.12.2001 DE 10160399**

(71) Anmelder: **Deutsches Zentrum für Luft- und
Raumfahrt e.V.
51147 Köln (DE)**

(72) Erfinder:
• **Reigber, Andreas, Dipl.-Phys.
82229 Seefeld (DE)**
• **Moreira, Alberto, Dr.-Ing.
82140 Olching (DE)**

(74) Vertreter: **von Kirschbaum, Albrecht, Dipl.-Ing.
Patentanwalt,
Postfach 15 20
82102 Germering (DE)**

(54) **Flugzeug- oder satellitengestütztes tomographisches Radarverfahren mit synthetischer Apertur (SAR)**

(57) Bei einem mit einem flugzeug- oder satellitengestützten Radarsensor arbeitenden, tomographischen Radarverfahren mit synthetischer Apertur (SAR) zur dreidimensionalen Objektabbildung, bei dem durch kohärente Kombination einer größeren Anzahl von SAR-Sensoraufnahmen aus unterschiedlichen Blickrichtungen eine echte dreidimensionale Abbildung gewonnen wird und die Rückstreubeiträge von Volumenzielen in der Höhe getrennt und unabhängig voneinander analysiert werden, wird gemäß der Erfindung die Realisierung der unterschiedlichen Blickrichtungen durch einen Satz von voneinander unabhängig arbeitenden und simultan betriebenen SAR-Antennen erreicht. Die Erfindung kann bei der dreidimensionalen Analyse von Vegetationsschichten und des Erdbodens, aber auch zur Abbildung und Kartierung von Gebäuden, Stadtbereichen und gebirgigen Gegenden verwendet werden.

Fig.1

EP 1 318 414 A2

**Beschreibung**

Die Erfindung betrifft ein mit einem flugzeug- oder satellitengestützten Radarsensor arbeitendes, tomographisches Radarverfahren mit synthetischer Apertur (SAR) zur dreidimensionalen Objektabbildung, wobei durch kohärente Kombination einer größeren Anzahl von SAR-Sensoraufnahmen aus unterschiedlichen Blickrichtungen eine echte dreidimensionale Abbildung gewonnen wird und die Rückstreubeiträge von Volumenzielen in der Höhe getrennt und unabhängig voneinander analysiert werden.

Abbildende Radarverfahren arbeiten mit einem aktiven Radarsensor, der mittels Abstrahlung und Empfang von elektromagnetischen Wellen im Mikrowellenbereich eine Reflektivitätskarte des beleuchteten Gebiets erstellt. In den letzten Jahren hat insbesondere das Radar mit synthetischer Apertur (SAR; Synthetic Aperture Radar) eine große Bedeutung in der Fernerkundung erlangt, was auf die hohe Auflösung und den vielfältigen Informationsgehalt von SAR-Bildern zurückzuführen ist. Neben traditionellen Anwendungen in der Geographie und der topographischen und thematischen Kartierung finden SAR-Sensoren heutzutage auch in vielen weiteren Bereichen Anwendung, wie z.B. in der Ozeanographie, Land- und Forstwirtschaft, Stadtplanung, Ökologie sowie bei der Vorhersage und Bewertung von Naturkatastrophen.

Eine wichtige Eigenschaft von SAR-Verfahren ergibt sich aus den Ausbreitungseigenschaften von Mikrowellen. Aufgrund ihrer langen Wellenlänge sind sie in der Lage, in die Vegetation und sogar in den Boden bis zu einer gewissen Tiefe einzudringen. Die Eindringtiefe hängt dabei von der Wellenlänge sowie von der dielektrischen Konstante und der Dichte des Objekts ab. Strahlung mit kürzeren Wellenlängen, wie im X-Band, zeigt eine starke Dämpfung und wird in erster Linie von den oberen Bereichen der Vegetation zurückgestreut. Strahlung von längeren Wellenlängen, wie im L- und P-Band, dringt dagegen typischerweise tief in die Vegetationsdecke und den Boden ein, und die Rückstreuung enthält daher Beiträge von sämtlichen von der Strahlung erreichten Schichten.

Ein Hauptproblem bei der Analyse von konventionellen SAR-Aufnahmen unter Verwendung von längeren Wellenlängen ist die Überlagerung von mehreren Rückstreubeiträgen. Obwohl im Prinzip ein bestimmter Rückstreubeitrag von Interesse in den Daten vorhanden ist, ist dieser oft nicht zugänglich, da nur die gesamte Rückstreuung gemessen werden kann. Ein weiteres Problem ist die Ermittlung der genauen vertikalen Position des Orts der Rückstreuung. Dieser ist generell unbekannt, da die gesamte SAR-Geometrie eine Symmetrie in der Elevation aufweist. Daher kann der Elevationswinkel bzw. die topographische Höhe der Rückstreuung mit einem konventionellen SAR-Radarverfahren nicht aufgelöst werden.

Ein bekanntes abbildendes SAR-Radarverfahren ist die so genannte SAR-Interferometrie (INSAR), die in dem Aufsatz von R.Bamler und P.Hartl: "Synthetic Aperture Radar Interferometry", Inverse Problems, Vol. 14, Seiten R1-R54, 1998 beschrieben ist und unter der eine Technik verstanden wird, bei der die Phasendifferenz zwischen zwei von leicht verschiedenen Positionen aufgenommenen SAR-Bildern ausgewertet wird. Diese Phasendifferenz hängt mit dem aufgetretenen Elevationswinkel und damit mit der Terrain-Topographie zusammen. Dies ermöglicht die Erstellung hochgenauer digitaler Höhenmodelle (DEMs; Digital Elevation Models) aus INSAR-Aufnahmen, wobei für jedes Bildelement die Höhe eines mittleren Streuzentrums entscheidend ist.

Die Verwendung von verschiedenen Wellenlängen oder Polarisationen eröffnet zusätzlich die Möglichkeit der Bestimmung der Höhe von mehreren, für die jeweilige Wellenlänge oder Polarisation charakteristischen Streuzentren. Dies kann zur Bestimmung der Dicke von Vegetationsschichten verwendet werden. Durch die Invertierung einfacher Streumodelle können zusätzlich noch weitere physikalische Parameter, wie z.B. die Dämpfungskonstante, bestimmt werden.

Das SAR-Interferometrie-Verfahren (INSAR) hat insbesondere den Nachteil, daß ausschließlich die Höhe eines mittleren Streuzentrums gemessen werden kann. Mit diesem Verfahren wird also keine echte dreidimensionale Abbildung erzielt, sondern nur die gemittelte topographische Höhe aller in einem Auflösungselement vorkommenden Streuer bestimmt. Im Fall von Volumenzielen erscheinen die verschiedenen Streubeiträge daher nach wie vor überlagert. Das INSAR-Verfahren ist aus diesem Grund für eine detaillierte Analyse von Volumenzielen ungeeignet. Obendrein sind INSAR-Messungen nicht völlig mehrdeutigkeitsfrei, und es ist ein weiterer Verarbeitungsschritt, nämlich das sogenannte »Phase Unwrapping«, nötig, um diese Mehrdeutigkeiten zu beseitigen.

Modellbasierte Ansätze auf der Grundlage von polarimetrischen oder multifrequenten Interferogrammen sind prinzipiell auf wenige einfache Parameter bei der Analyse von Volumenzielen beschränkt. Ihr Einsatzbereich ist daher sehr limitiert. Außerdem sind sie stark von der Gültigkeit des verwendeten Streumodells abhängig und versagen völlig, wenn die getroffenen Annahmen nicht stimmen.

Eine weitere Technik für die Analyse von dreidimensionalen Objekten ist die sogenannte "Multi-Pass-Tomographie", die aus dem Aufsatz von A. Reigber und A. Moreira: "First Demonstration of Airborne SAR Tomography using Multibaseline L-band Data", IEEE Trans. on Geoscience and Remote Sensing, Vol. 38, No. 5, Seiten 2142-2152, September 2000 bekannt ist. Hier wird durch kohärente Kombination einer größeren Anzahl von SAR-Aufnahmen aus verschiedenen Blickrichtungen eine echte dreidimensionale Abbildung erzielt. Die Rückstreubeiträge von Volumenzielen werden in der Höhe getrennt und können daher unabhängig voneinander analysiert werden. Auch eine Kombination dieser Technik mit der Polarimetrie ist möglich. In diesem Fall lassen sich nicht nur Aussagen über die dreidimensionale Verteilung der Streuprozesse, sondern auch über den Typ des jeweiligen Streuprozesses treffen.

Das Hauptproblem bei der bekannten Multi-Pass-Tomographie ist der extrem hohe experimentelle Aufwand. Nur mit einer großen Zahl paralleler Flugbahnen (>10) ist eine sinnvolle Auflösung, kombiniert mit einem vernünftigen Bildkontrast, zu erreichen. Dies erfordert lange Flugzeiten für einen relativ kleinen abgebildeten Bereich. Da die relativen Abstände zwischen den Flugbahnen für die Datenverarbeitung mit Millimetergenauigkeit bekannt sein müssen, werden durch die Multi-Pass-Technik auch hohe Anforderungen an die Positionierung des Sensors gestellt. Diese lassen sich bislang nur unzureichend erfüllen. Schließlich schränkt die nicht zu vermeidende ungleichmäßige Verteilung der Flugbahnen die Qualität der Abbildung stark ein. Multi-Pass-Tomographie ist daher nur als ein Funktionsnachweis von flugzeuggetragener SAR-Tomographie zu verstehen.

Aus US-5 463 397 A ist noch ein interferometrisches SAR-Radarsystem bekannt, das Multi-Pass-SAR-Interferometrie mit sukzessiver Doppelantennen-SAR-Interferometrie kombiniert, um Höhenkarten mit einer Genauigkeit zu erzielen, die mit einer dieser Methoden allein nicht erreicht werden kann. Auch hier treten die vorher beschriebenen Nachteile der Multi-Pass-Tomographie auf.

Eine Trennung der Rückstreubeiträge in der Höhe läßt sich auch durch senkrecht nach unten abgesandte Radarimpulse erreichen, wie in dem Aufsatz von M. Hallikainen, J. Hyyppä, J. Haapanen, T. Tares, P. Ahola, J. Pulliainen, M. Toikka: "A helicopter-borne eight-channel ranging scatterometer for remote sensing - Part 1: System description", IEEE Trans. on Geoscience and Remote Sensing, Vol. 31, No. 1, Seiten 161-169, 1993 beschrieben ist. Anders als bei den beiden vorher erläuterten, bekannten Methoden wird die Höhenauflösung hier durch die Laufzeitmessung des Radars erzielt.

Mit senkrecht nach unten abgestrahlten Radarimpulsen läßt sich zwar eine gute Höhenauflösung erzielen, aber nur eine sehr geringe räumliche Auflösung. Die Streifenbreite einer solchen Abbildung muß gering bleiben, um eine nahezu senkrechte Einfallsrichtung zu gewährleisten. Eine großflächige Abbildung ist daher nicht möglich.

Ganz ähnlich bieten auch Lidar(Light Detection and Ranging)-Sensoren die prinzipielle Möglichkeit einer dreidimensionalen Objektanalyse. Statt Mikrowellenimpulsen werden hier kurze Laserimpulse senkrecht nach unten abgesandt, wobei wiederum eine präzise Laufzeitmessung eine Höhenauflösung ermöglicht. Mit beiden Methoden lassen sich daher Profile entlang der Flugbahn des Sensors bestimmen. Ähnlich wie bei senkrecht nach unten gestrahlten Radarimpulsen gilt auch für Lidar-Systeme, daß nur eine geringe Streifenbreite erzielt werden kann, da andernfalls die streifende Einfallsrichtung ein Eindringen der Laserimpulse bis zum Boden verhindern würde. Auch bei senkrechtem Einfall ist ein Lidar von kleinen Lücken im Wald abhängig, um bis zum Boden einzudringen, und ist daher stark vom Waldtyp abhängig. Auch Bewölkung verhindert den Einsatz eines Lidar-Systems. Generell kann man mit einem Lidar nur die Vegetationshöhe messen; zu einer dreidimensionalen Analyse von Volumen kann es nicht benutzt werden.

Der Erfindung liegt die Aufgabe zu Grunde, bei einem dreidimensional abbildenden SAR-Radarsystem die Durchführung einer getrennten Analyse der überlagerten Rückstreubeiträge, kombiniert mit einer genauen Bestimmung der dazugehörigen Elevationswinkel ohne allzu hohen technischen und zeitlichen Aufwand zu ermöglichen, was für eine Reihe von Anwendungen von großer Bedeutung wäre. Zu denken ist dabei an eine dreidimensionale Analyse der Rückstreuung von Vegetationsschichten, die Bestimmung von deren Schichtdicke und Biomasse, als auch die Korrektur der von Vegetation verursachten Verfälschungen der Rückstreuung des darunter liegenden Bodens. Eine genaue und mehrdeutigkeitsfreie Bestimmung der topographischen Höhe aus dem Elevationswinkel der Rückstreuung würde außerdem Anwendungsmöglichkeiten in der dreidimensionalen Abbildung und Kartierung von Gebäuden, Stadtbereichen und gebirgigen Gegenden eröffnen.

Gemäß der Erfindung, die sich auf ein tomographisches Radarverfahren der eingangs genannten Art bezieht, wird diese Aufgabe dadurch gelöst, daß die unterschiedlichen Blickrichtungen durch einen Satz von voneinander unabhängig arbeitenden und simultan betriebenen SAR-Antennen gebildet werden. Im Gegensatz zur vorher erläuterten, bekannten Multi-Pass-Tomographie, bei der unterschiedliche Blickwinkel durch wiederholte parallele Überflüge realisiert werden, wird statt dessen beim erfindungsgemäßen Verfahren ein Satz von unabhängigen SAR-Antennen simultan betrieben. Mit dem durch die Erfindung vorgeschlagenen Verfahren werden die für Multi-Pass-Tomographie geltenden Nachteile beseitigt.

Das Verfahren nach der Erfindung bietet eine Reihe von Vorteilen. Es wird eine eindeutige Bestimmung des Ursprungs aller Streubeiträge ermöglicht, unabhängig von Annahmen über die abgebildeten Objekte. Das Verfahren nach der Erfindung bietet eine echte dreidimensionale Abbildung des Untersuchungsgebiets. Die gesamte Datenaufzeichnung erfolgt mit einem einzigen Überflug. Der operationelle Aufwand wird damit stark verringert. Eine ungleichmäßige Verteilung der Flugbahnen und die damit zusammenhängende geringe Abbildungsqualität werden vermieden. Eine temporale Dekorrelation während der Datenaufzeichnung wird vermieden.

Vorteilhafte Weiterbildungen und Ausführungsmöglichkeiten der Erfindung sind in den Unteransprüchen angegeben, die unmittelbar oder mittelbar auf den Patentanspruch 1 rückbezogen sind.

Im Falle flugzeuggestützter Radarsensoren werden in vorteilhafter Weise die unterschiedlichen Blickrichtungen durch einzelne simultan betriebene und physikalisch zueinander in fester Relation stehende SAR-Antennenelemente einer am Flugzeug fest angebrachten Antennengruppe gebildet. Bei einer festen Anbringung der Antennenelemente am Flugzeug sinken die Anforderungen an die absolute Positionierung des Sensors auf ein vertretbares Maß. Die relativen Abstandsvektoren zwischen den Antennenelementen können bei der Konstruktion des Sensors exakt eingemessen werden.

Gewöhnlich wird beim Verfahren nach der Erfindung der Radarsensor in Seitensichtrichtung betrieben.

Eine Variante des erfindungsgemäßen Verfahrens ist es, einen solchen Sensor nicht in Seitensicht-, sondern statt dessen in Vorwärtsblickrichtung zu betreiben. Auf diese Weise läßt sich auch mit einer kleinen Antennengruppe eine hohe Auflösung in der Höhe erzielen. Die lange synthetische Apertur, die sich aus der Vorwärtsbewegung des Sensors ergibt, führt in Vorwärtsblickrichtung zu einer sehr hohen Auflösung in der Elevation und damit in der Höhe. Eine hohe Entfernungsauflösung resultiert aus der Laufzeitmessung des Radars selber. Senkrecht zur Bewegungsrichtung des Sensors in der horizontalen Ebene ergibt sich ein Auflösungsvermögen entsprechend der Länge der realen Apertur der Antennengruppe senkrecht zur Flugrichtung.

Eine weitere Variante des erfindungsgemäßen Verfahrens ist der Betrieb mit Blickrichtung nach unten. In diesem Fall erzeugt die lange synthetische Apertur in Flugrichtung eine hohe Auflösung im Azimut; die Höhenauflösung ergibt sich aus der Laufzeitmessung des Radars. Senkrecht zur Bewegungsrichtung des Sensors wird wiederum durch die reale Apertur der Antennengruppe in dieser Richtung ein höheres Auflösungsvermögen gewonnen.

Im Fall weltraumgestützter Sensoren läßt sich eine fest angebrachte Antennengruppe nicht einsetzen, da sinnvolle Größen für die Antennengruppe im Kilometerbereich liegen würden. Dies läßt sich mit einer fest montierten Antennengruppe nicht realisieren, sondern nur mit einer adäquaten Anordnung von physikalisch getrennten Sensoren. Im Falle satellitengestützter Radarsensoren werden die unterschiedlichen Blickrichtungen somit in vorteilhafter Weise durch einzelne simultan betriebene SAR-Antennen von Empfängern auf physikalisch getrennten Satelliten einer sich gemeinsam und gleichförmig bewegenden Satellitengruppe gebildet, wobei von einem Satellit der Gruppe aus gesendet wird.

Eine Variante des erfindungsgemäßen Verfahrens ist die Erweiterung des sogenannten "Cartwheel"-Konzepts von D. Massonet (WO 99/58997) auf eine größere Anzahl von Satelliten zur Durchführung einer dreidimensionalen Objektabbildung. Mit einer räumlich ausreichend ausgedehnten Verteilung der Empfängersatelliten läßt sich auch über weite Entfernungen eine qualitativ hochwertig Abbildung erzielen.

Die Erfindung wird nachfolgend anhand von in Zeichnungen dargestellten Ausführungsbeispielen erläutert. Es zeigen:

Fig.1 eine Abbildungsgeometrie zur dreidimensionalen Objektabbildung in Seitensicht, wobei eine Antennengruppe ein Volumenziel von unterschiedlichen Blickwinkeln aus betrachtet,

Fig.2 eine vereinfachte tomographische Abbildungsgeometrie,

Fig.3 in zwei Diagrammen (Fig.3a und Fig.3b) simulierte Impulsantworten eines tomographischen Radarsensors in Seitensicht,

Fig.4 in zwei Diagrammen (Fig.4a und Fig.4b) simulierte Impulsantworten eines tomographischen Radarsensors in Vorwärtssicht,

Fig.5 in zwei Diagrammen (Fig.5a und Fig.5b) simulierte Impulsantworten eines tomographischen Radarsensors mit Sicht nach unten,

Fig.6 eine prinzipielle Abbildungsgeometrie eines tomographischen flugzeuggestützten Radarsensors in Vorwärtssicht,

Fig.7 eine Abbildungsgeometrie eines tomographischen flugzeuggestützten Radarsensors in Vorwärtssicht mit Darstellung der Aperturlängen,

Fig.8 eine gemäß dem Verfahren nach der Erfindung arbeitende Erweiterung des "Cartwheel"-Konzepts zur dreidimensionalen Objektabbildung von satellitengestützten Sensoren aus,

Fig.9 eine andere gemäß dem Verfahren nach der Erfindung arbeitende Erweiterung des "Cartwheel"-Konzepts zur dreidimensionalen Objektabbildung von satellitengestützten Sensoren aus, und

Fig. 10 noch eine andere gemäß dem Verfahren nach der Erfindung arbeitende Erweiterung des "Cartwheel"-Konzepts zur dreidimensionalen Objektabbildung von satellitengestützten Sensoren aus, wobei eine gleichmäßige Verteilung der unterschiedlichen Blickwinkel gegeben ist.

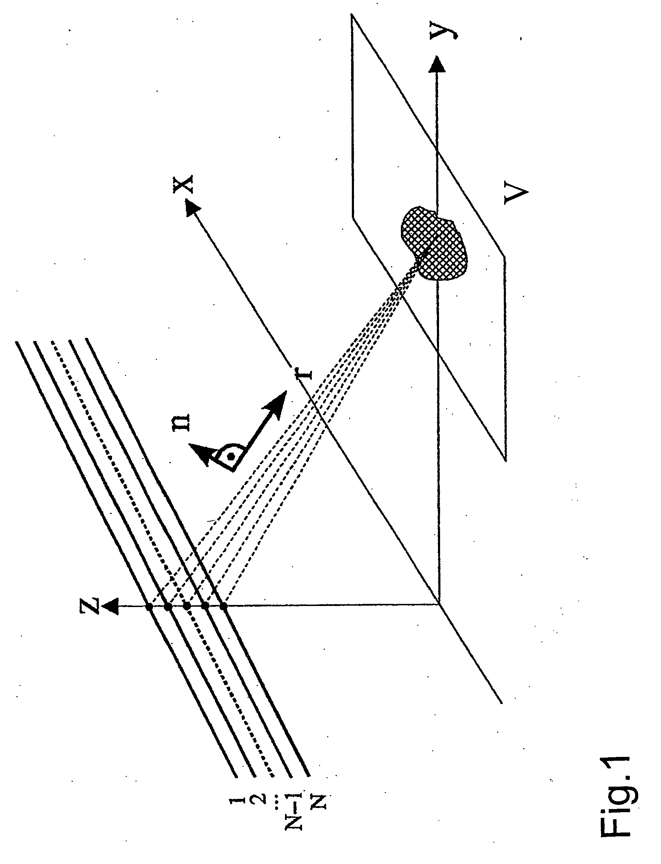

In Fig.1 ist in einem kartesischen x-y-z-Koordinatensystem die grundlegende Geometrie eines Radarsensors in Seitensicht zur dreidimensionalen Objektabbildung dargestellt. Die Bewegung des Sensors geschieht parallel entlang der x-Achse. Die verschiedenen unabhängigen Antennenelemente einer Antennengruppe sind so angeordnet, daß sich von jedem (Bahnen 1,2,...,$N$-1,$N$ der Antennenelemente) ein unterschiedlicher Blickwinkel auf die Szene und damit auf Volumenziele V ergibt.

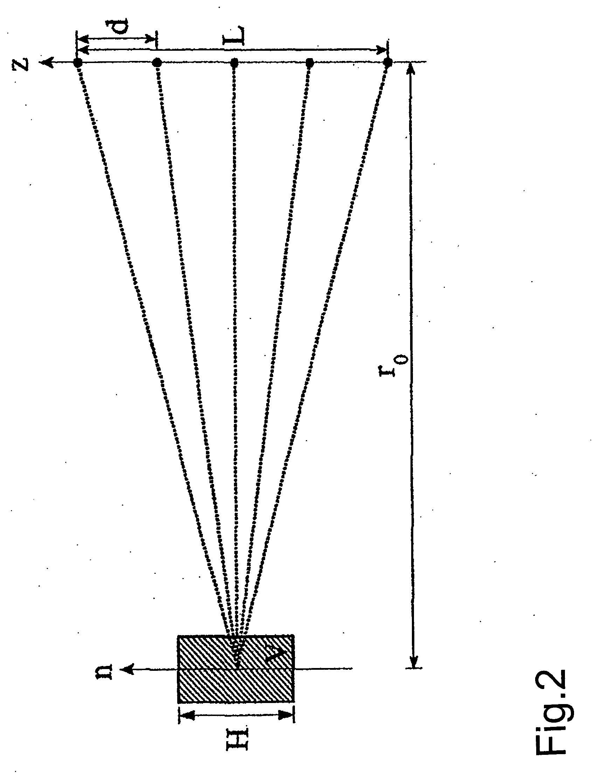

In Fig.2 ist eine vereinfachte Geometrie dargestellt, bei welcher eine aus Antennenelementen bestehende Antennengruppe die Aperturlänge L und die Abstände zwischen den Antennenelementen d beträgt und bei welcher der mittlere Einfallswinkel 0 Grad beträgt, d.h. die n-Achse aus Fig.1 parallel zur z-Richtung ist. In dieser Geometrie beträgt der Abstand zwischen einem Streuer in der Höhe $n_0$ und dem Antennenelement mit der Position $z$

$$r(z, n_0) = 2\sqrt{r_0^2 + (z - n_0)^2} \approx 2r_0 + \frac{(z - n_0)^2}{r_0}. \qquad (1)$$

Das von diesem Antennenelement empfangene Signal $s_r(z,n_0)$ läßt sich damit folgendermaßen modellieren:

$$s_r(z, n_0) = a(n_0) \exp\left(-\frac{ik}{r_0}(z - n_0)^2\right), \qquad (2)$$

wobei $k=2\pi/\lambda$ die Wellenzahl der ausgesandten Wellen und $a(n_0)$ die komplexe Reflektivität in der Höhe $n_0$ bezeichnen. Für die Verarbeitung bietet sich ein Ansatz ähnlich demjenigen des SPECAN-Verfahrens an. Multipliziert man dieses Signal mit einer sogenannten "Deramping"-Funktion $u(z)$

$$u(z) = \exp\left(+\frac{ik}{r_0}z^2\right), \qquad (3)$$

so ergibt sich ein Signal, dessen Wellenzahl in $z$-Richtung nicht mehr von $z$, sondern nur noch von der Höhe des Streuers $n_0$ abhängig ist:

$$s_d(z, n_0) = a(n_0) \exp\left(-\frac{ik}{r_0}\left(n_0^2 - 2zn_0\right)\right). \qquad (4)$$

Daraus folgt, daß der spektrale $k_z$-Bereich proportional zu dem räumlichen $n$-Bereich ist, verbunden mit der Relation $k_z=2kn_0/r_0$. Durch eine Fourier-Transformation in $z$-Richtung ergibt sich daher das Bildergebnis $v(n,n_0)$:

$$v(n, n_0) = FT_z\big(s_d(z, n_0)\big) = a(n_0)L \exp\left(\frac{-ikn_0^2}{r_0}\right) \sin c\left(\frac{kL}{r_0}(n_0 - n)\right). \quad (5)$$

Die Auflösung des Bildergebnisses in n-Richtung ergibt sich aus den Positionen der ersten Nullstellen der "Sinus Cardinalis"-Funktion und beträgt:

$$\delta_n = \frac{\lambda r_0}{2L}. \tag{6}$$

Zum Beispiel würde ein System im L-Band in einer Flughöhe von 500m und einer Gesamtausdehnung der Antennengruppe von 30m in etwa ein Auflösung von 3m zeigen.

Zu beachten ist des weiteren der Abstand $d$ der einzelnen Antennenelemente. Damit das von einem Volumen der Höhe H erzeugte Signalspektrum ausreichend abgetastet wird, ist die Bedingung

$$d \le \frac{\lambda r_0}{2H} \tag{7}$$

einzuhalten. Andernfalls ergeben sich innerhalb des untersuchten Volumens starke Mehrdeutigkeiten.

Die Auflösungen in Entfernung und entlang der Flugrichtung sind identisch zu einem konventionellen SAR-Sensor und betragen $c\tau/2$ bzw. $L_{az}/2$, wobei c die Lichtgeschwindigkeit, $\tau$ die Pulsdauer und $L_{az}$ die Länge der Antenne in Flugrichtung bezeichnen.

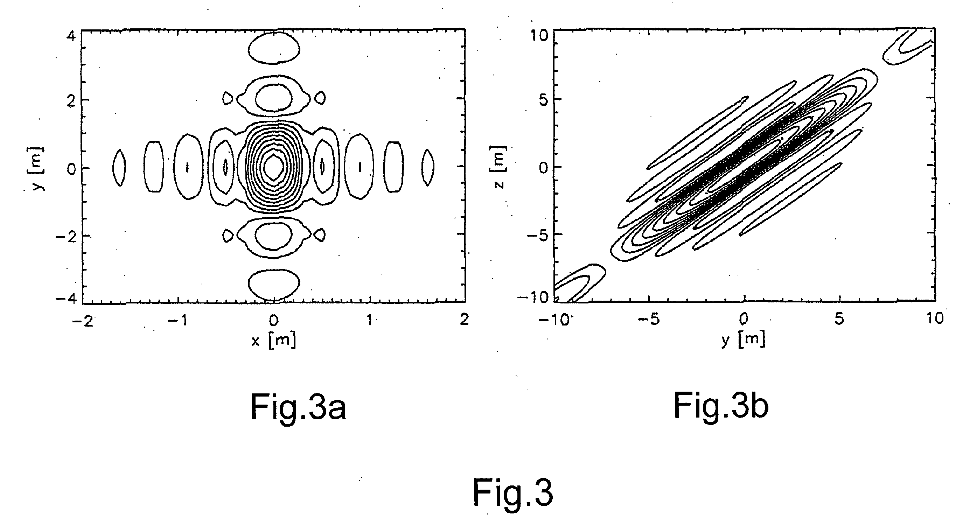

Fig.3a und Fig. 3b zeigen in $x$-$y$-Darstellung bzw. in $y$-$z$-Darstellung simulierte Impulsantworten eines erfindungsgemäß arbeitenden tomographischen Radarsensors in Seitensicht. Die Systemparameter bei dieser Simulation sind: L-Band, 150 MHz Bandbreite, 1000m Flughöhe, Länge der Antennengruppe $L_y$=25m mit 30 Elementen, synthetische Apertur im Azimut 500m und ein Squintwinkel $\chi$=0°.

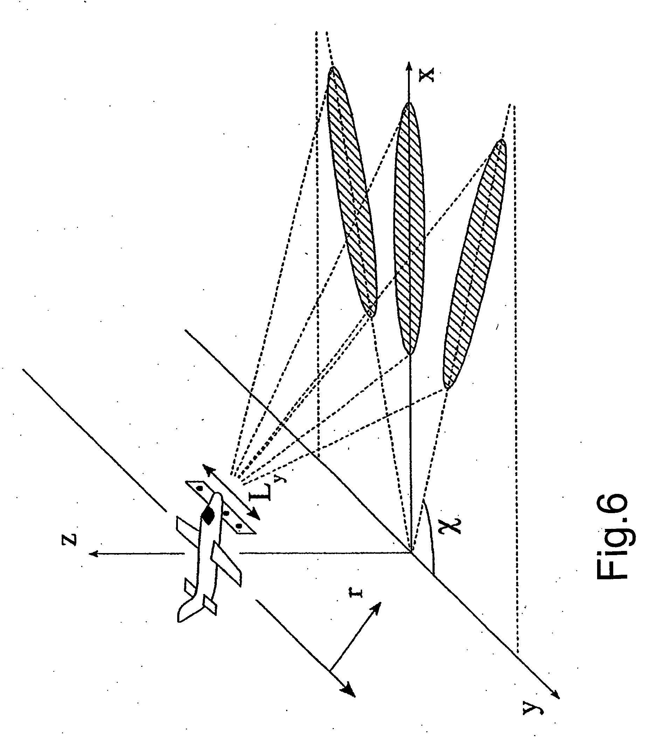

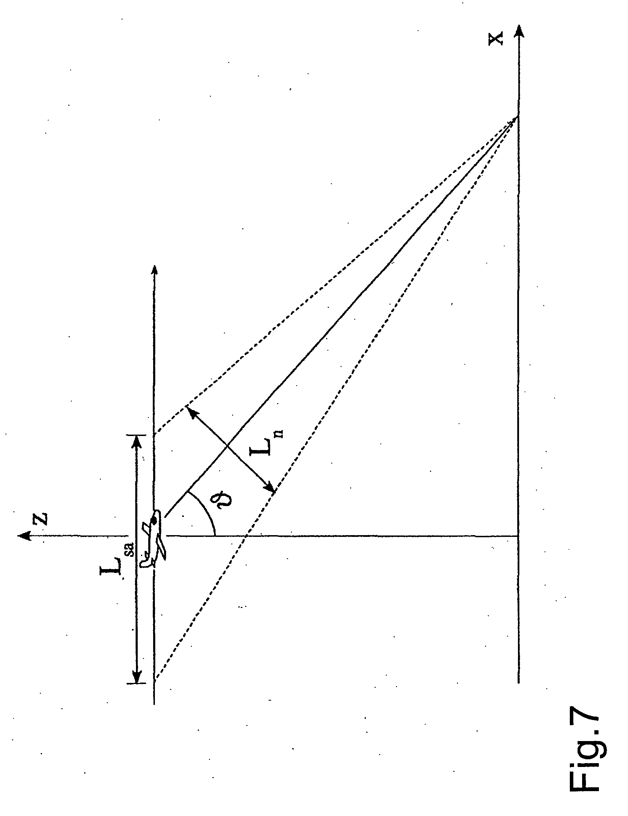

In Fig.6 und Fig.7 ist die prinzipielle Abbildungsgeometrie eines gemäß dem Verfahren nach der Erfindung arbeitenden flugzeuggestützten Radarsensors in Vorwärtssicht dargestellt. Die Ableitung des Auflösungsvermögens in der Höhe ist analog zu vorstehender Ableitung. Zur Fokussierung ist hier aber nicht die Ausdehnung der Antennengruppe entscheidend, sondern die Projektion der synthetischen Apertur in Flugrichtung auf die Richtung senkrecht zur Blickrichtung, was aus Fig.7 hervorgeht. Ihre Länge $L_n$ hängt vom Off-Nadir-Winkel $\vartheta$ ab und beträgt $L_n=L_{sa}\cos(\vartheta)$. Mit der gleichen quadratischen Näherung wie in Gleichung (1) und unter Verwendung von $L_n=\lambda\cos(\vartheta)/L$ ergibt sich:

$$\delta_n = \frac{\lambda r_0}{2L_n} = \frac{L}{2\cos\vartheta}, \tag{8}$$

wobei $L$ die reale Aperturlänge der Antennen in Flugrichtung bezeichnet. Ähnlich wie bei konventionellem SAR in Flugrichtung ist diese Auflösung nicht mehr von der Entfernung abhängig. Aus diesem Grund sind die erzielbaren Auflösungen vergleichbar mit den konventionellen Azimutauflösungen und können problemlos einen Meter oder weniger erreichen. Das Problem der ungleichmäßigen Abtastung und der Unterabtastung, wie es bei der Multi-Pass-Tomographie auftritt, ist hier bedeutungslos, da durch eine annähernd konstante Fluggeschwindigkeit und eine ausreichend hohe Pulswiederholfrequenz ein starkes Überabtasten der Daten, auch für große Volumendicken, erreicht werden kann.

In der $y$-Richtung ist nur die reale Länge $L_y$, die von der Antennengruppe gebildet wird, verfügbar. Es kann wiederum die obige Ableitung verwendet werden, um die Auflösung in dieser Richtung zu bestimmen. Da die Auflösung aufgrund einer realen Apertur zustande kommt, ist sie entfernungsabhängig und erreicht ihren größten Wert in der direkten Vorwärtsrichtung (Squint-Winkel $\chi$=90°). Zu den Seiten mit sinkendem Squint fällt auch die Auflösung ab, da die effektive Apertur abnimmt:

$$\delta_y = \frac{\lambda r_0}{2L_y\cos(\chi)}. \tag{9}$$

Aufgrund der limitierten Ausdehnung der Antennengruppe und der Entfernungsabhängigkeit der Auflösung ist $\delta_y$ verhältnismäßig gering für übliche Systemparameter. Trotzdem kann mit einer relativ geringen Flughöhe auch mit einer geringen Größe der Antennengruppe eine akzeptable Auflösung erzielt werden. Zum Beispiel zeigt eine Antennengruppe mit einer Gesamtlänge von 5m in 1000m Entfernung eine Auflösung von 25m.

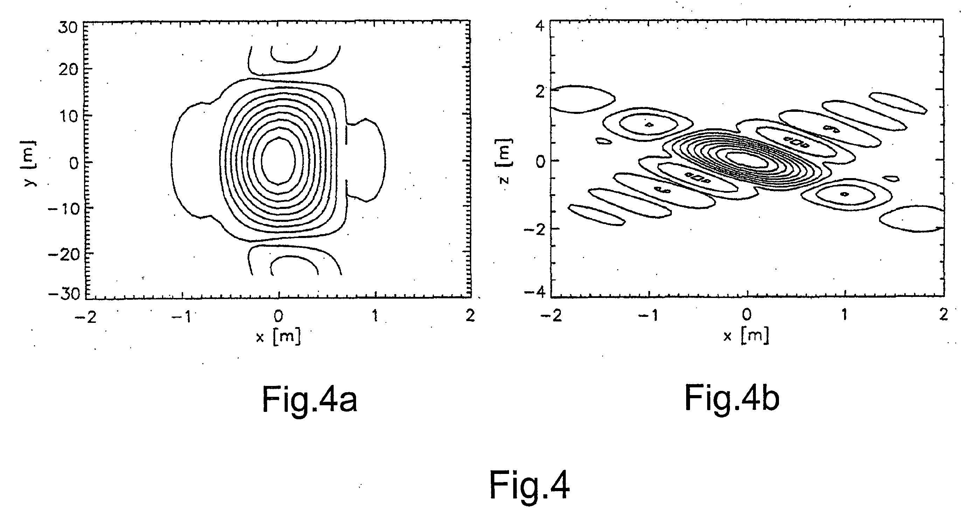

Fig.4a und Fig. 4b zeigen in $x$-$y$-Darstellung bzw. in $x$-$z$-Darstellung simulierte Impulsantworten eines erfindungsgemäß arbeitenden tomographischen Radarsensors in Vorwärtssicht. Die Systemparameter bei dieser Simulation sind: L-Band, 150 MHz Bandbreite, 1000m Flughöhe, Länge der Antennengruppe $L_y$=10m mit 20 Elementen, synthetische Apertur im Azimut 500m und ein Squintwinkel $\chi$=90°.

Die Variante mit Blickrichtung nach unten liefert ähnliche Ergebnisse, nur daß die Höhenauflösung hier rein durch die Genauigkeit der Laufzeitmessung bestimmt wird. Die Auflösung in Flugrichtung entspricht der eines konventionellen SAR-Sensors; senkrecht zur Flugrichtung gilt wiederum Gleichung (9), wobei hier χ den Blickwinkel zur Seite darstellt. Simulierte Impulsantworten sind in Fig.3c dargestellt.

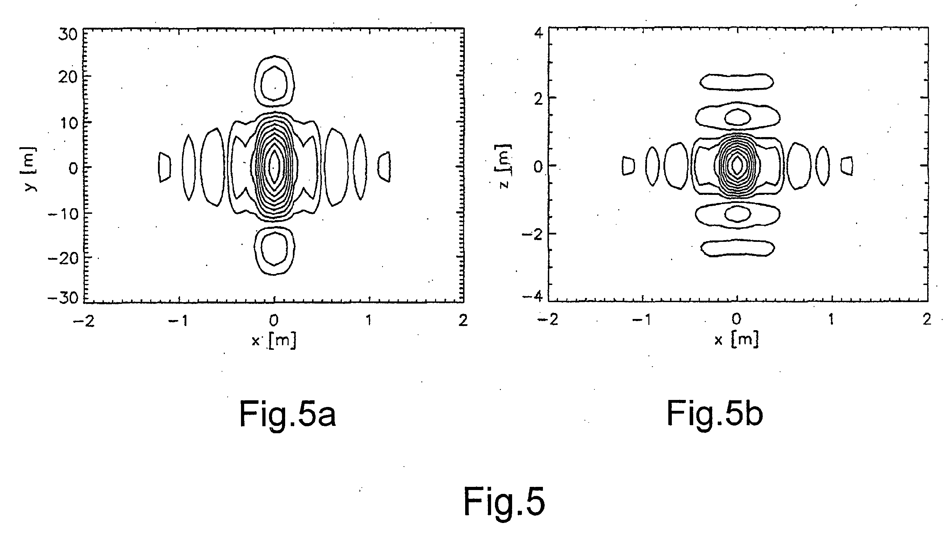

Fig.5a und Fig. 5b zeigen in *x-y*-Darstellung bzw. in *x-z*-Darstellung simulierte Impulsantworten eines erfindungsgemäß arbeitenden tomographischen Radarsensors mit Sicht nach unten. Die Systemparameter bei dieser Simulation sind: L-Band, 150 MHz Bandbreite, 1000m Flughöhe, Länge der Antennengruppe $L_y$=10m mit 20 Elementen, synthetische Apertur im Azimut 500m und ein Squintwinkel χ=90°.

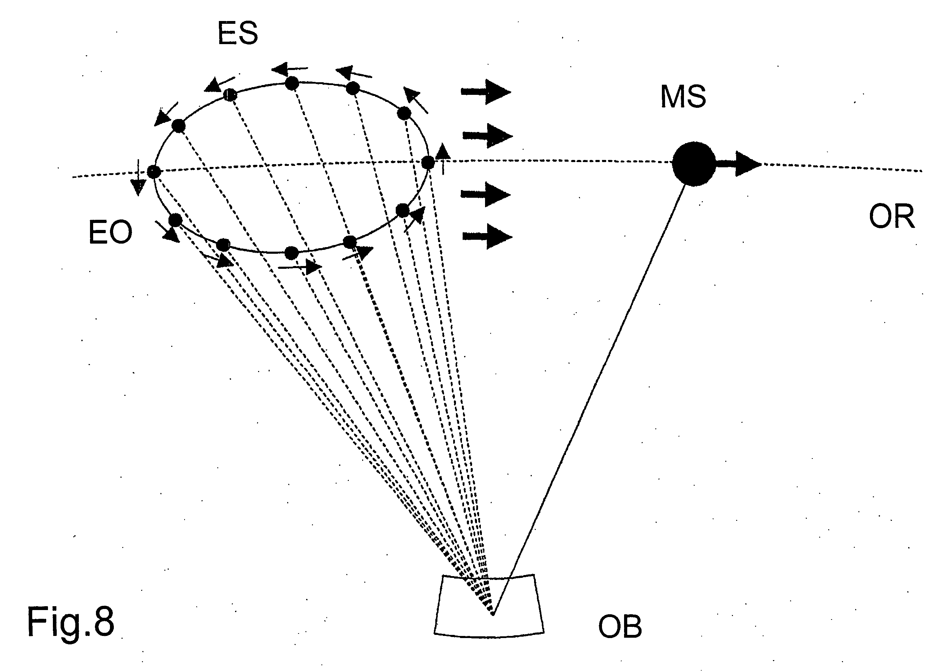

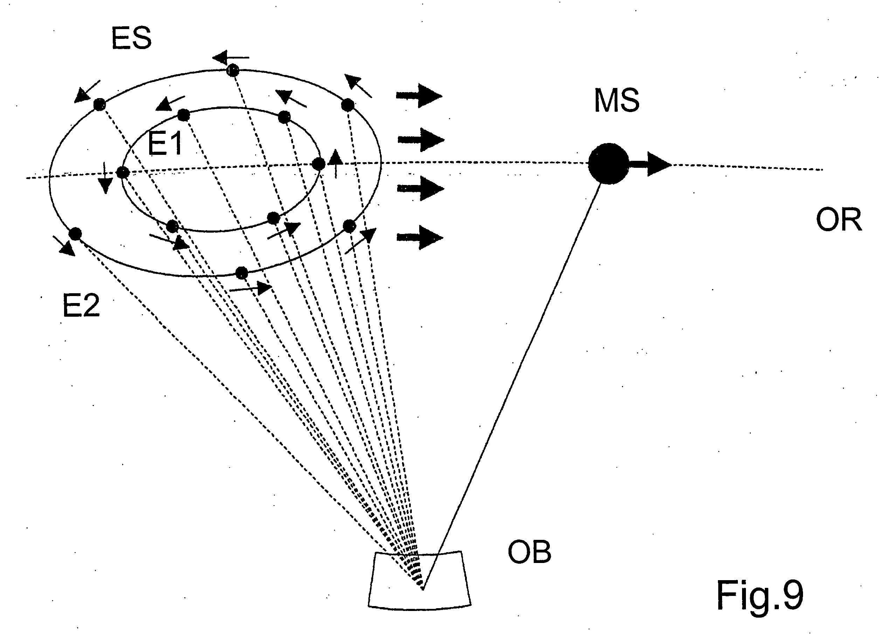

In Fig.8 und Fig.9 sind zwei verschiedene Möglichkeiten für eine entsprechend dem Verfahren nach der Erfindung arbeitende Erweiterung des satellitengestützten "Cartwheel"-Konzepts dargestellt. Bei diesem Konzept folgen eine Anzahl von Empfängersatelliten ES einem sendenden Mastersatelliten MS, wobei die Empfängersatelliten ES die vom Objekt OB nach Bestrahlung durch den Mastersatelliten MS rückgestreuten Signale empfangen. Durch eine geeignete Einstellung des von den Satelliten ES und MS zu durchlaufenden Orbits OR ist es möglich, daß sich die Empfängersatelliten ES stabil und in gleichmäßigen Abständen auf einer Ellipse E0 hinter dem Mastersatelliten MS bewegen. Durch die Anordnung einer größeren Anzahl von Empfängersatelliten ES in einem oder mehreren in einer Ebene zueinander parallelen "Cartwheels" hinter dem Mastersatelliten MS lassen sich multiple Blickwinkel auf das Objekt realisieren. Im Ausführungsbeispiel der Fig.9 bewegen sich auf zwei "Cartwheel"-Ellipsen E1 und E2 die Empfängersatelliten ES hinter dem Mastersatelliten MS.

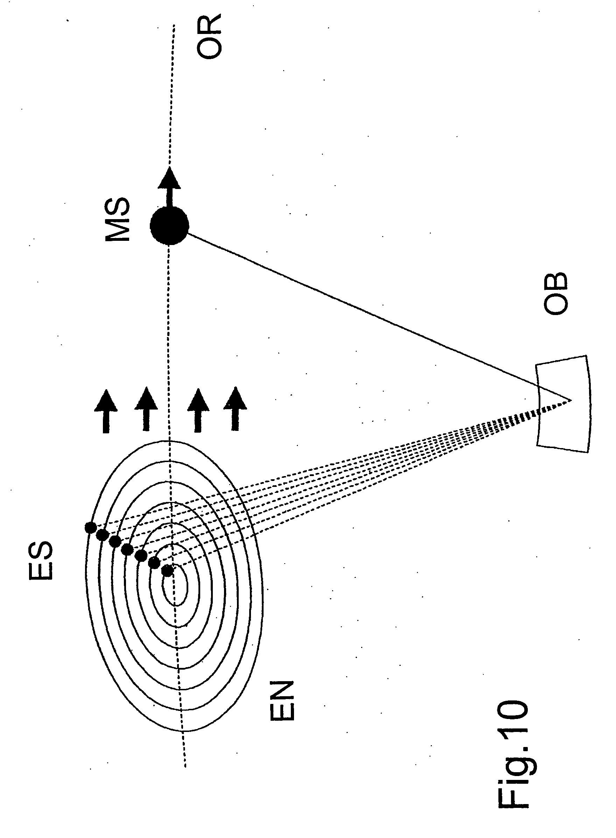

In Fig.10 ist eine weitere Möglichkeit für eine entsprechend dem Verfahren nach der Erfindung arbeitende Erweiterung des satellitengestützten "Cartwheel"-Konzepts dargestellt. Hier läuft auf jeder von mehreren in einer Ebene zueinander parallelen "Cartwheel"-Ellipsen EN nur ein einziger Empfängersatellit ES um. Die Empfängersatelliten ES liegen insgesamt auf einem gemeinsamen Brennstrahl aller Ellipsen E0 und folgen dem Mastersatelliten auf dem Orbit OR.

Ein "Cartwheel"-System arbeitet in Seitensicht. Das Auflösungsvermögen in der Höhe wird daher von Gleichung (6) beschrieben. Die Aperturlänge L ist hier der Durchmesser der gesamten Anordnung. Zum Beispiel würde ein "Cartwheel"-System im L-Band in einer Flughöhe von 500km für eine Höhenauflösung von 3m einen Durchmesser von etwa 30km benötigen. Bei einer Anordnung wie in Fig.10 wären dabei 10 Satelliten nötig, um ein Volumen mit einer Dicke von 30m mehrdeutigkeisfrei abzubilden.

Bezugszeichenliste

| | |
|---|---|
| E1, E2 | Ellipsen |
| EN | Ellipsen |
| E0 | Ellipse |
| ES | Empfängersatellit |
| MS | Mastersatellit |
| OB | Objekt |
| OR | Orbit |
| V | Volumenziel |

**Patentansprüche**

1.  Mit einem flugzeug- oder satellitengestützten Radarsensor arbeitendes, tomographisches Radarverfahren mit synthetischer Apertur (SAR) zur dreidimensionalen Objektabbildung, wobei durch kohärente Kombination einer größeren Anzahl von SAR-Sensoraufnahmen aus unterschiedlichen Blickrichtungen eine echte dreidimensionale Abbildung gewonnen wird und die Rückstreubeiträge von Volumenzielen in der Höhe getrennt und unabhängig voneinander analysiert werden, **dadurch gekennzeichnet, daß** die unterschiedlichen Blickrichtungen durch einen Satz von voneinander unabhängig arbeitenden und simultan betriebenen SAR-Antennen gebildet werden.

2.  Radarverfahren nach Anspruch 1, **dadurch gekennzeichnet, daß** im Falle flugzeuggestützter Radarsensoren die unterschiedlichen Blickrichtungen durch einzelne simultan betriebene und physikalisch zueinander in fester Relation stehende SAR-Antennenelemente einer am Flugzeug fest angebrachten Antennengruppe gebildet werden.

3.  Radarverfahren nach Anspruch 1, **dadurch gekennzeichnet, daß** im Falle satellitengestützter Radarsensoren die unterschiedlichen Blickrichtungen durch einzelne simultan betriebene SAR-Antennen von Empfängern auf physikalisch getrennten Satelliten einer sich gemeinsam und gleichförmig bewegenden Satellitengruppe gebildet werden, wobei von einem Master-Satellit aus gesendet wird.

4. Radarverfahren nach Anspruch 3, **dadurch gekennzeichnet, daß** auf einem Orbit (OR) eine Anzahl von Empfängersatelliten (ES) einem sendenden Mastersatelliten (MS) folgt und daß der Orbit der Satelliten so eingestellt ist, daß sich die Empfängersatelliten stabil auf einer Ellipse (E0) oder auf mehreren in einer Ebene zueinander parallelen Ellipsen (E1, E2, EN) hinter dem Mastersatelliten gleichsinnig bewegen.

5. Radarverfahren nach Anspruch 4, **dadurch gekennzeichnet, daß** mehrere jeweils auf einer Ellipse (E0, E1, E2) gleichsinnig umlaufende Empfängersatelliten (ES) sich mit gleichen gegenseitigen Abständen bewegen.

6. Radarverfahren nach Anspruch 4, **dadurch gekennzeichnet, daß** auf jeder von mehreren in einer Ebene parallelen Ellipsen (EN) jeweils ein Empfängersatellit (ES) umläuft und daß die Empfängersatelliten auf einem gemeinsamen Brennpunktstrahl aller Ellipsen liegen.

7. Radarverfahren nach einem der vorhergehenden Ansprüche, **dadurch gekennzeichnet, daß** die Radarsensoren in Seitensichtrichtung betrieben werden.

8. Radarverfahren nach einem der Ansprüche 1 bis 2, **dadurch gekennzeichnet, daß** die Radarsensoren in Vorwärtssichtrichtung betrieben werden.

9. Radarverfahren nach einem der Ansprüche 1 bis 2, **dadurch gekennzeichnet, daß** die Radarsensoren in Sichtrichtung nach unten betrieben werden.

Fig.1

EP 1 318 414 A2

Fig.2

Fig.3a

Fig.3b

Fig.3

EP 1 318 414 A2

Fig.4a                    Fig.4b

Fig.4

EP 1 318 414 A2

Fig.5a                    Fig.5b

Fig.5

Fig.6

Fig.7

ES

MS

EO

OR

OB

Fig.8

EP 1 318 414 A2

ES
E1
E2
MS
OR
OB
Fig.9

EP 1 318 414 A2

Fig.10

EP 1 318 414 A2